Europäisches Patentamt

European Patent Office

Office européen des brevets

(11) Veröffentlichungsnummer: **0 020 943**
**A1**

## (12) EUROPÄISCHE PATENTANMELDUNG

(21) Anmeldenummer: 80102331.8

(22) Anmeldetag: 30.04.80

(51) Int. Cl.³: **H 02 G 7/05**, F 16 L 3/12,
H 02 G 3/26

(30) Priorität: **13.06.79 DE 2923893**

(43) Veröffentlichungstag der Anmeldung: **07.01.81**
**Patentblatt 81/1**

(84) Benannte Vertragsstaaten: **AT BE CH FR GB IT LI NL SE**

(71) Anmelder: **Karl Pfisterer Elektrotechnische
Spezialartikel GmbH & Co. KG, Augsburger Strasse 375,
D-7000 Stuttgart 60 (DE)**

(72) Erfinder: **Büchele, Norbert, Endersbacher Strasse 1,
D-7056 Weinstadt (DE)**
Erfinder: **Gerlach, Dieter, Finkenweg 29,
D-7446 Oberboihingen (DE)**

(74) Vertreter: **Patentanwälte Dr. Wolff; H. Bartels
Dipl.-Chem. Dr. Brandes Dr.-Ing. Held; Dipl.-Phys. Wolff,
Lange Strasse 51, D-7000 Stuttgart 1 (DE)**

(54) **Hängeklemme für isolierte Leiter und Leiterbündel.**

(57)_ Eine Hängeklemme für isolierte Leiter und Leiterbündel weist einen Polsterkörper (8) auf, der aus einem gummielastischen Werkstoff besteht und den Leiter oder das Leiterbündel wenigstens teilweise umfasst. Die dem Leiter oder Leiterbündel abgekehrte Seite dieses Polsterkörpers (8) liegt an einem Tragkörper an, der durch eine biegsame metallische Lasche (1) gebildet ist. Wenigstens der eine der beiden Endbereiche des den Leiter oder das Leiterbündel wenigstens teilweise umfassenden Abschnitts der Lasche (1) ist mit in Laschenlängsrichtung im Abstand voneinander angeordneten Rastelementen (7) versehen, mit denen wahlweise ein am anderen Endbereich vorgesehenes Gegenelement (4) verrastbar ist.

0020943

Reg.-Nr. 125 951

Karl Pfisterer Elektrotechnische Spezialartikel
GmbH & Co KG
Stuttgart-Untertürkheim (Baden-Württemberg)

---

Hängeklemme für isolierte Leiter und Leiterbündel

---

05.06.79
33 09/rpp

Die Erfindung betrifft eine Hängeklemme für isolierte Leiter und Leiterbündel, mit einer einen Tragkörper bildenden, metallischen Lasche, die im Bereich ihres einen Endabschnittes eine Einrichtung zum Anhängen an ein Tragelement hat und einen den Leiter oder das Leiterbündel zumindest teilweise umfassenden Abschnitt aufweist, dessen beide Endbereiche lösbar miteinander verbunden sind und an dessen dem Leiter oder Leiterbündel zugekehrten Seite eine sich an den Leiter oder das Leiterbündel unter wenigstens teilweiser Umfassung desselben anlegender Polsterkörper aus einem gummielastischen Werkstoff anliegt.

Bei den bekannten Hängeklemmen dieser Art bildet die formstabile Lasche einen Haken, welcher den in Form einer in Längsrichtung geschlitzten Hülse ausgebildeten Polsterkörper aufnimmt. Eine Schraube, welche durch eine Bohrung im freien Hakenende und eine auf sie ausgerichtete Bohrung in dem dem freien Hakenende gegenüberliegenden Abschnitts hindurchgesteckt und mittels einer Mutter festgelegt wird, nachdem der

0020943

Leiter oder das Leiterbündel zusammen mit dem Polsterkörper in den Haken eingelegt worden sind, verhindert, daß der Leiter oder das Leiterbündel unbeabsichtigt aus dem Haken austreten kann. Eine Änderung der Hakengröße ist wegen der Formstabilität der Lasche mit dieser Schraube nicht möglich. Diese Hängeklemmen haben aber nicht nur den Nachteil, daß sie nicht an unterschiedliche Kabel- oder Bündelquerschnitte angepaßt werden können. Nachteilig ist auch der relativ grosse Aufwand für ihre Herstellung.

Der Erfindung liegt die Aufgabe zugrunde, eine Hängeklemme für isolierte Leiter und Leiterbündel zu schaffen, die für unterschiedliche Querschnitte des Leiters oder Leiterbündels verwendbar ist und dennoch kostengünstig hergestellt werden kann. Diese Aufgabe ist mit einer Hängeklemme der eingangs genannten Art erfindungsgemäß dadurch gelöst, daß die Lasche biegsam ausgebildet ist und daß wenigstens der eine der beiden Endbereiche des den Leiter oder das Leiterbündel wenigstens teilweise umfassenden Abschnitts mit in Laschenlängsrichtung im Abstand voneinander angeordneten Rastelementen versehen ist, mit denen wahlweise ein am anderen Endbereich vorgesehenes Gegenelement verrastbar ist.

Die biegsame Lasche vermindert zum einen den Fertigungsaufwand und ermöglicht es zum anderen, die Krümmung im Bereich des den Leiter oder das Leiterbündel umfassenden Abschnitts an die Erfordernisse anzupassen, wodurch mit ein und derselben Klemme ein relativ großer Querschnittsbereich überdeckt werden kann, was die Lagerhaltungskosten vermindert und auch insoweit zu einer Rationalisierung beiträgt. Die Rastelemente und das mit ihnen zusammenwirkende Gegenelement ermöglichen es mit einfachen Mitteln, dem den Leiter oder das Leiterbündel umfassenden Abschnitt die erforderliche Größe zu geben. Gleichzeitig wird durch die von ihnen hergestellte Verbindung das Kabel gegen ein Austreten aus dem Trägerkörper gesichert.

0020943

Genügt für die Anpassung an unterschiedliche Leiter- oder Bündelquerschnitte ein einziges Gegenelement nicht, dann können selbstverständlich auch mehrere in Längsrichtung der Lasche im Abstand voneinander angeordnete Gegenelemente vorgesehen werden.

Welchem der beiden Endbereiche die Rastelemente zweckmäßigerweise zugeordnet werden, hängt in erster Linie von der Ausbildung der Rastelemente und des Gegenelementes ab. Sind, wie dies bei der bevorzugten Ausführungsform der Fall ist, als Rastelemente Durchbrüche der Lasche vorgesehen und ist das Gegenelement als eine durch den ausgewählten Durchbruch steckbare Zunge ausgebildet, welche eine im verriegelten Zustand die einander gegenüberliegenden Ränder des Durchbruches aufnehmende Einschnürung hat, dann werden die Rastelemente vorteilhafterweise in demjenigen Endabschnitt vorgesehen, der sich an den die Einrichtung zum Anhängen an ein Tragelement aufweisenden Abschnitt anschließt. Allerdings könnte ein derartiger Durchbruch auch das Gegenelement bilden. Als Rastelemente kämen dann mehrere Paare von Einschnürungen in Frage, die in Laschenlängsrichtung im Abstand voneinander im Bereich der durch den Durchbruch steckbaren Zunge vorzusehen wären.

Vorzugsweise haben die Durchbrüche die Form von Querschlitzen mit wenigstens zwei Bereichen unterschiedlicher Breite, damit die Zunge ohne Schwierigkeiten eingeführt und dennoch zuverlässig im Bereich geringerer Breite verriegelt werden kann. Die Weite der beiden Bereiche kann dann nur wenig größer als die Dicke der Lasche sein. Besonders vorteilhaft ist es, wenn zwischen dem der Einrichtung zum Anhängen an ein Tragelement am nächsten liegenden Bereich und einem Bereich geringerer Weite ein dritter Bereich liegt, der die geringste Weite aller Bereiche hat, weil dann die Zunge in besonders einfacher Weise gegen eine ungewollte Verschiebung gesichert werden kann.

Vorzugsweise besteht die Lasche aus Federstahl, weil sie dann auch bei einer relativ geringen Stärke noch eine ausreichende Tragfähigkeit hat und die Herstellung sowie die Montage der Hängeklemme besonders einfach sind.

Der Polsterkörper besteht vorzugsweise aus Gummi oder einem gummielastischem Kunststoff, damit er sich dicht an den Leiter oder das Leiterbündel anlegt und der Leiter oder das Leiterbündel in ausreichendem Maße gegen eine Längsverschiebung in der Hängeklemme gesichert sind. Die Haltekraft des Polsterkörpers kann dadurch noch verbessert werden, daß man die dem Leiter oder Leiterbündel zugekehrte Innenseite mit nutartigen Vertiefungen versieht, die in Längsrichtung der Lasche verlaufen und in Querrichtung der Lasche im Abstand voneinander liegen. Damit sich der Polsterkörper nicht selbst relativ zur Lasche in Längsrichtung des Leiters oder Leiterbündels verschieben kann, übergreifen bei der bevorzugten Ausführungsform seine seitlichen Randzonen die seitlichen Ränder der Lasche.

Im folgenden ist die Erfindung anhand eines in der Zeichnung dargestellten Ausführungsbeispiels im einzelnen erläutert. Es zeigen:

Fig. 1    eine Stirnansicht des Ausführungsbeispiels,

Fig. 2    eine Ansicht von vorne des Ausführungsbeispiels,

Fig. 3    eine Draufsicht auf das Ausführungsbeispiel,

Fig. 4    eine Ansicht der Lasche im gestreckten Zustand.

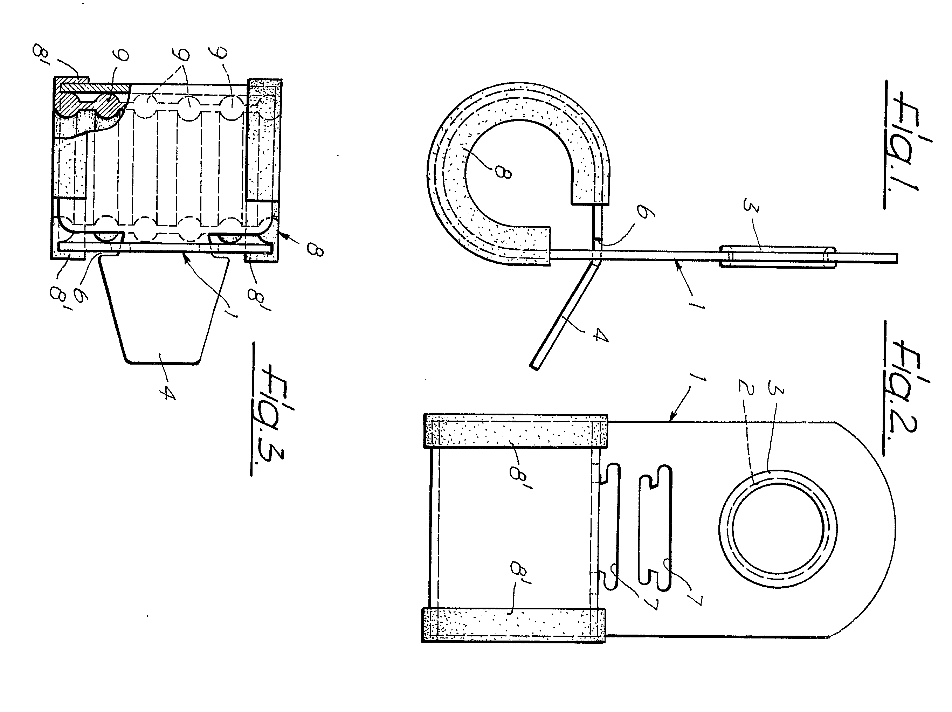

Der Klemmen- oder Tragkörper der in den Fig. 1 bis 4 dargestellten Hängeklemme für isolierte Leiter und Leiterbündel eines Energieversorgungsnetzes wird durch eine biegsame Lasche 1 gebildet, die aus Federstahl besteht und daher trotz ihrer relativ geringen Dicke von 1mm eine ausreichende

- 5 -                                    0020943

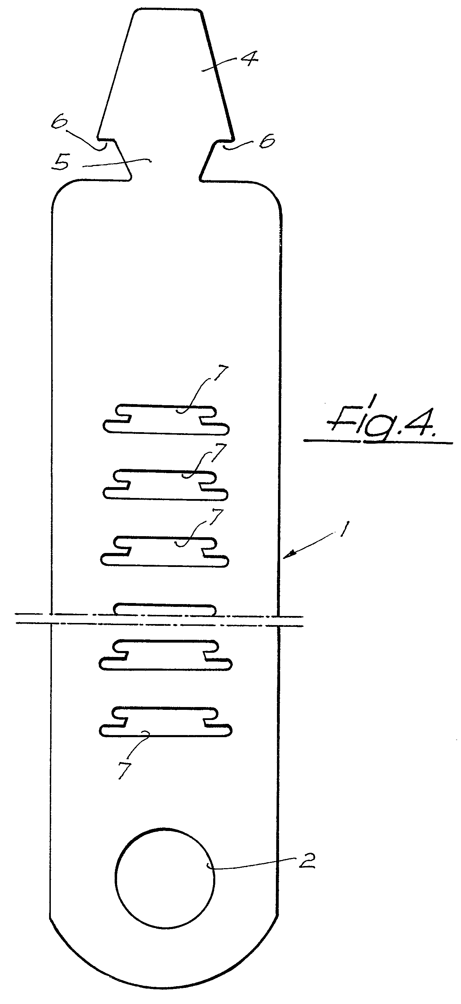

Tragfähigkeit hat. Wie die Fig. 2 und 4 zeigen, ist im einen Endabschnitt der Lasche 1 ein mittig angeordnetes, kreisrundes Loch 2 ausgestanzt, dessen Rand von einer in das Loch eingesetzten Buchse 3 aus Kunststoff oder Gummi übergriffen wird. Das Loch 2 dient zum Anhängen einer Klemme an ein nicht dargestelltes Tragelement, beispielsweise an einen Haken.

Der andere Endabschnitt der Lasche 1 bildet, wie insbesondere Fig. 4 zeigt, eine sich in Laschenlängsrichtung erstreckende, mittig angeordnete Zunge 4, deren Breite geringer ist als die Breite der Lasche und zum freien Ende der Zunge hin gleichmäßig abnimmt. Der Übergang zwischen der Zunge 4 und dem restlichen Teil der Lasche 1 wird durch einen Halsabschnitt 5 gebildet, der wegen zwei einander gegenüberliegenden, spiegelbildlich gleich ausgebildeten Nuten 6 in seinen beiden seitlichen Rändern eine geringere Breite als die Zunge 4 und die Lasche 1 hat. Wie Fig. 4 zeigt, verlaufen die seitlichen Flanken der Nuten 6 im rechten Winkel zur Längsmittelachse der Lasche 1 und der Zunge 4. Der Nutgrund schließt bei beiden Nuten 6 einen spitzen Winkel mit dieser Längsachse ein, so daß die Breite des Halsabschnittes 5 zur Zunge 4 hin gleichmäßig zunimmt. Die Nuten 6 werden bei der Bildung der Zunge 4 ausgestanzt, so daß auch der die Zunge bildende Endabschnitt der Lasche 1 kostengünstig gefertigt werden kann.

Der Mittelabschnitt der Lasche 1 weist mehrere, im Ausführungsbeispiel neun, Querschlitze 7 auf, die alle mittig angeordnet sind und die gleiche Form haben. Auch die Zwischenräume zwischen den Querschlitzen 7, die aus der Lasche 1 ausgestanzt werden, sind im Ausführungsbeispiel alle gleich groß. Wie die Fig. 2 und 4 zeigen, bestehen die Querschlitze 7 je aus drei in Laschenlängsrichtung unmittelbar nebeneinanderliegenden Bereichen unterschiedlicher Breite, wobei der Bereich größter Breite auf der der Zunge 4 abgekehrten Seite liegt. Seine Breite ist etwas größer als die größte Breite der Zunge 4. Die Breite des mittleren Bereiches ist nur geringfügig größer als die Breite des Halsabschnittes 5 an der Stelle geringster Breite, und die Breite des dritten Abschnittes ist etwas kleiner als die Breite des Halsabschnittes 5 an der Stelle größter Breite. Die Weite aller drei Abschnitte der Querschlitze 7 ist etwas größer als die Dicke der Lasche 1.

Im Mittelabschnitt der Lasche 1 liegt an der dem zu tragenden Leiter oder Leiterbündel zugekehrten Seite ein aus Gummi oder einem Kunststoff mit gummiähnlichen Eigenschaften bestehender Polsterkörper 8 an, dessen beide seitlichen Randzonen 8' die seitlichen Ränder der Lasche 1 übergreifen. Der Polsterkörper 8 ist hierdurch gegen eine Verschiebung relativ zur Lasche 1 in der Querrichtung gesichert. Eine Verschiebung in Laschenlängsrichtung ist aber möglich, solange der Polsterkörper 8 vom Leiter oder Leiterbündel nicht belastet ist. Die Länge des Polsterkörpers 8, gemessen in Längsrichtung der Lasche 1, ist, wie Fig. 1 zeigt, so gewählt, daß der Polsterkörper den Leiter oder das Leiterbündel nahezu auf dessen gesamtem Umfang zu umfassen vermag. Die dem Leiter oder Leiterbündel zugekehrte Innenseite des Polsterkörpers 8 weist, wie Fig. 3 zeigt, mehrere wulstartige Erhöhungen 9 auf, die in Längsrichtung der Lasche 1 verlaufen und in Querrichtung der Lasche 1 nebeneinander unter Bildung gleicher Zwischenräume angeordnet sind. Durch diese wulstartigen Erhöhungen 9 wird die Haltekraft der Hängeklemme gegenüber einem Zug in Leiterlängsrichtung verbessert.

Die Montage der Hängeklemme erfolgt in der Weise, daß der den Polsterkörper 8 tragende Abschnitt der Lasche 1 um den Leiter oder das Leiterbündel herum gelegt wird, und zwar so, daß der Polsterkörper am Leiter oder Leiterbündel anliegt. Der Kraftbedarf ist hierzu nicht sehr groß, da sich die Lasche 1 wegen ihrer geringen Dicke leicht biegen läßt. Die Zunge 4 wird dann je nach dem Durchmesser des Leiter oder Leiterbündels durch denjenigen der Querschlitze 7 hindurchgesteckt, der eine enge Umfassung des Leiter oder Leiterbündels ergibt. Die Zunge 4 wird dabei in den Bereich des Querschlitzes 7 mit der größten Breite eingeführt, und

0020943

zwar so weit, bis die am Übergang vom Halsabschnitt 5 zur Lasche 1 vorhandene Schulter in Anlage an die seitlich neben dem Querschlitz 7 liegenden Bereiche der Lasche 1 kommt. Sodann wird der Halsabschnitt 5 durch den mittleren Bereich des Querschlitzes 7 hindurch in den unteren Bereich gebracht. Wird nun die Zunge 4 freigegeben, dann wird die Zunge 4 so weit zurückgezogen, bis sie in Anlage an die Lasche 1 kommt. Da hierbei der Halsabschnitt 5 im Querschlitz 7 auch verklemmt wird, erhält man eine zuverlässige, in Zugrichtung formschlüssige Verbindung des die Zunge 4 tragenden Endes der Lasche mit dem die Querschlitze 7 aufweisenden Bereich. Es besteht also keine Gefahr, daß sich die Verbindung ungewollt löst und die Hängeklemme das Kabel freigibt. Danach braucht nur noch die Lasche 1 in einen Haken oder dergleichen eingehängt zu werden.

Selbstverständlich ist es auch möglich, zuerst die Lasche 1 in ein Tragelement einzuhängen und dann erst die Zunge 4 um den Leiter oder das Leiterbündel herum zu führen und in einem der Querschlitze 7 zu verriegeln.

Patentansprüche

1. Hängeklemme für isolierte Leiter und Leiterbündel, mit einer einen Tragkörper bildenden, metallischen Lasche, die im Bereich ihres einen Endabschnittes eine Einrichtung zum Anhängen an ein Tragelement hat und einen den Leiter oder das Leiterbündel zumindest teilweise umfassenden Abschnitt aufweist, dessen beide Endbereiche lösbar miteinander verbindbar sind und an deren dem Leiter oder Leiterbündel zugekehrten Seite ein sich an den Leiter oder das Leiterbündel unter wenigstens teilweiser Umfassung desselben anlegender Polsterkörper aus einem gummielastischem Werkstoff anliegt, dadurch gekennzeichnet, daß die Lasche (1) biegsam ausgebildet ist und daß wenigstens der eine der beiden Endbereiche des den Leiter oder das Leiterbündel wenigstens teilweise umfassenden Abschnitts mit in Laschenlängsrichtung im Abstand voneinander angeordneten Rastelementen (7) versehen ist, mit denen wahlweise ein am anderen Endbereich vorgesehenes Gegenelement (4) verrastbar ist.

2. Hängeklemme nach Anspruch 1, dadurch gekennzeichnet, daß als Rastelemente Durchbrüche (7) der Lasche (1) vorgesehen sind und das Gegenelement als eine durch den ausgewählten Durchbruch steckbare Zunge ausgebildet ist, die eine die einander gegenüberliegenden Ränder des Durchbruchs aufnehmende Einschnürung (5) aufweist.

3. Hängeklemme nach Anspruch 2, dadurch gekennzeichnet, daß die Durchbrüche die Form von Querschlitzen mit wenigstens zwei Bereichen unterschiedlicher Breite haben.

4. Hängeklemme nach Anspruch 3, dadurch gekennzeichnet, daß die Weite der beiden Bereiche jedes Querschlitzes (7) nur wenig größer ist als die Dicke der Lasche (1).

0020943

5. Hängeklemme nach Anspruch 3 oder 4, dadurch gekennzeichnet, daß zwischen dem der Einrichtung (2) zum Anhängen an ein Tragelement am nächsten liegenden Bereich jedes Querschlitzes (7) und einem Bereich geringerer Breite ein dritter Bereich liegt, der die geringste Breite aller Bereiche hat.

6. Hängeklemme nach einem der Ansprüche 2 bis 5, dadurch gekennzeichnet, daß die Zunge (4) durch einen Endabschnitt der Lasche (1) gebildet ist.

7. Hängeklemme nach einem der Ansprüche 1 bis 6, dadurch gekennzeichnet, daß die Lasche (1) aus Federstahl besteht.

8. Hängeklemme nach einem der Ansprüche 1 bis 7, dadurch gekennzeichnet, daß der Polsterkörper (8) aus Gummi oder einem Kunststoff mit gummiähnlichen Eigenschaften besteht.

9. Hängeklemme nach einem der Ansprüche 1 bis 8, dadurch gekennzeichnet, daß die dem Leiter oder Leiterbündel zugekehrte Innenseite des Polsterkörpers (8) mit wulstartigen Erhöhungen (9) versehen ist, die in Längsrichtung der Lasche (1) verlaufen und in Querrichtung im Abstand voneinander angeordnet sind.

10. Hängeklemme nach einem der Ansprüche 1 bis 9, dadurch gekennzeichnet, daß der Polsterkörper (8) die seitlichen Ränder der Lasche (1) übergreifende Randzonen hat.

- . -

_Fig.1._

_Fig.2._

_Fig.3._

0020943

*Fig.4.*

Europäisches
Patentamt

**EUROPÄISCHER RECHERCHENBERICHT**

00209 4З

Nummer der Anmeldung

EP 80 10 2331

## EINSCHLÄGIGE DOKUMENTE

| Kategorie | Kennzeichnung des Dokuments mit Angabe. soweit erforderlich, der maßgeblichen Teile | betrifft Anspruch |
|---|---|---|
| X | <u>GB - A - 571 361</u> (TINNERMAN)<br><br>* Seite 3, Zeilen 28-34; Seite 4, Zeilen 65-80; Seite 5, Zeilen 24-45; Figuren 12-14 *<br><br>-- | 1-4,6-10 |
| X | <u>US - A - 2 466 912</u> (RITE)<br><br>* Spalte 2, Zeilen 1-39; Spalte 3, Zeilen 9-20; Figuren 3,4 *<br><br>-- | 1-4,7-10 |
|  | <u>GB - A - 702 313</u> (TINNERMAN)<br><br>* Seite 2, Zeile 113 bis Seite 3, Zeile 76; Figuren 1-8 *<br><br>---- | 1-3,5-10 |

**KLASSIFIKATION DER ANMELDUNG (Int. Cl. )**

H 02 G 7/05
F 16 L 3/12
H 02 G 3/26

**RECHERCHIERTE SACHGEBIETE (Int. Cl. )**

H 02 G 7/05
H 02 G 7/20
H 02 G 7/08
F 16 L 3/12
H 02 G 3/26

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-09-1980 | TIELEMANS |